# FASCICULE DE BREVET EUROPEEN

(11) **EP 0 751 401 B1**
(45) Date de publication et mention de la délivrance du brevet: **13.02.2002**
(21) Numéro de dépôt: 96401387.4
(22) Date de dépôt: 27.06.1996
(51) Int. Cl.: G01S 13/84

(54) **Dispositif permettant de s'affranchir des problèmes de diaphonie lors de la localisation d'un véhicule se déplaçant le long de moyens de propagation d'ondes électromagnétiques**
Vorrichtung zur Behebung von Übersprechenproblemen beim Orten von Fahrzeugen die sich entlang von elektromagnetischen Wellenausbreitungsmitteln bewegen
Device for removing crosstalk problems in the location of a vehicle moving along electromagnetic wave propagation median

(30) Priorité: 27.06.1995 FR 9507723
(43) Date de publication de la demande: 02.01.1997
(73) Titulaire: GEC ALSTHOM TRANSPORT SA, 75016 Paris (FR)
(72) Inventeur: Fournier, Denis Alain, 92320 Chatillon (FR)
(74) Mandataire: Gosse, Michel

(56) Documents cités:
- EP-A- 0 568 067
- EP-A- 0 586 230
- WO-A-87/03698
- DE-A- 3 124 068

## Description

La présente invention concerne les dispositifs de localisation de véhicules se déplaçant le long de moyens de propagation d'ondes électromagnétiques, en général, et porte, plus particulièrement, sur un dispositif permettant de s'affranchir des problèmes de diaphonie lors de la localisation d'un véhicule se déplaçant le long de moyens de propagation d'ondes électromagnétiques.

Le système de transmission de la demanderesse, désigné sous le nom de système IAGO, pour Informatisation et Automatisation par Guide d'Ondes, est basé sur l'utilisation d'un guide d'ondes rayonnant.

Ce système de transmission permet une communication continue bidirectionnelle à haut débit d'informations entre un équipement fixe et un équipement mobile.

Le guide d'ondes rayonnant est un médium de transmission en aluminium placé le long de la voie.

Le guide d'ondes rayonnant véhicule les informations issues du sol ou du mobile à des fréquences appartenant à la bande des applications industrielles, scientifiques et médicales comprise entre 2,4 à 2,5 Ghz.

Outre la transmission d'informations, ce système de transmission permet de connaître la vitesse vraie du mobile ainsi que sa position absolue le long de la voie.

Le dispositif de localisation d'un véhicule V se déplaçant le long de moyens de propagation P d'ondes électromagnétiques, comprend:
- des moyens d'émission E d'ondes électromagnétiques émises Σₑ,
- des moyens de réflexion R' desdites ondes électromagnétiques émises Σₑ,
- des moyens de réception R des ondes électromagnétiques réfléchies Σᵣ par lesdits moyens de réflexion R',
- des moyens de comparaison C desdites ondes électromagnétiques émises Σₑ et desdites ondes électromagnétiques réfléchies Σᵣ, et
- des moyens de traitement T du résultat obtenu par lesdits moyens de comparaison C permettant de déterminer la distance D entre ledit véhicule V et lesdits moyens de réflexion R'.

Les moyens de propagation P des ondes électromagnétiques émises Σₑ et desdites ondes électromagnétiques réfléchies Σᵣ sont des moyens de propagation rayonnants.

Conformément à un premier mode de réalisation, les moyens d'émission E des ondes électromagnétiques émises Σₑ et les moyens de réception R des ondes électromagnétiques réfléchies Σᵣ, les moyens de comparaison C et les moyens de traitement T sont supportés par le véhicule V.

Les moyens de réflexion R' des ondes électromagnétiques émises Σₑ sont associés aux moyens de propagation P et sont disposés au sol.

Conformément à un autre mode de réalisation, les moyens d'émission E des ondes électromagnétiques émises Σₑ et les moyens de réception R des ondes électromagnétiques réfléchies Σᵣ, les moyens de comparaison C et les moyens de traitement T sont associés aux moyens de propagation P et sont disposés au sol.

Les moyens de réflexion R' des ondes électromagnétiques émises Σₑ sont supportés par le véhicule V.

A titre d'exemple, les moyens d'émission E sont des moyens d'émission radar.

Les ondes électromagnétiques émises Σₑ et réfléchies Σᵣ sont des ondes radars.

Les ondes électromagnétiques émises Σₑ se composent d'une onde porteuse émise d'amplitude constante et modulée en fréquence et dans lequel les ondes électromagnétiques réfléchies Σᵣ se composent d'une onde porteuse réfléchie modulée en fréquence.

Les moyens de réflexion R' sont susceptibles de transposer en fréquence l'onde porteuse émise composant les ondes électromagnétiques émises Σₑ.

Le traitement par les moyens de traitement T du résultat obtenu par lesdits moyens de comparaison C porte sur une mesure de différence de phase entre l'onde porteuse émise et l'onde porteuse réfléchie.

Dans un tel dispositif de localisation d'un véhicule, il est nécessaire, pour des raisons de sécurité, de s'affranchir des problèmes de diaphonie entre plusieurs réflecteurs lors de la localisation d'un véhicule sur une voie par rapport à deux réflecteurs proches l'un de l'autre, d'une part, ou des problèmes de diaphonie entre plusieurs véhicules lors de la localisation de deux véhicules sur une même voie par rapport à un seul réflecteur, d'autre part.

Il est connu du document IEEE Vehiculer Technology Society News, May 1994, pages 13 à 28 un dispositif de localisation par émission continue simultanée de séquences de faibles intercorrélations.

Un tel dispositif de localisation d'un véhicule a pour inconvénient d'être complexe et d'un coût élevé.

Un autre inconvénient de ce dispositif de localisation d'un véhicule de l'art antérieur est qu'il nécessite l'utilisation d'une multitude de station ainsi qu'une synchronisation entre ces multiples stations.

Il est connu du document DE-A1-31 24 068 un dispositif de localisation de véhicules dans lequel les émissions des émetteurs sont alternées et peuvent comprendre un signal codé à destination d'un réflecteur afin que ce dernier renvoie une réponse dans les moments où il reçoit son code d'identité propre. Un tel dispositif permet de supprimer la diaphonie entre plusieurs réflecteurs mais présente l'inconvénient d'être relativement complexe.

Aussi est-ce le mérite de la demanderesse que de proposer un dispositif permettant de s'affranchir des problèmes de diaphonie lors de la localisation d'un véhicule se déplaçant le long de moyens de propagation d'ondes électromagnétiques ne présentant pas les inconvénients des dispositifs de l'art antérieur.

Le dispositif permettant de s'affranchir des problèmes de diaphonie lors de la localisation d'un véhicule se déplaçant le long de moyens de propagation d'ondes électromagnétiques de l'invention ne va pas à l'encontre de la très grande précision quand aux objectifs suivant:
- Résolution des problèmes dit de "tir au but" précis dans le cas particulier de quais équipés de portes palières.
- Diminution de l'intervalle entre deux trains permettant un fonctionnement selon le principe dit du "canton mobile déformable".

Le principe du canton mobile est basé sur le fait que la voie n'est plus divisée géographiquement de manière à définir une suite de cantons fixes indéformables mais est organisée virtuellement de manière à définir une suite de cantons mobiles.

De plus, cette suite de cantons mobiles se compose de cantons déformables du fait que le début et la fin de chacun des cantons ont des positions susceptibles d'évoluer.

En d'autres termes, le principe du canton mobile déformable se base sur le fait que l'arrière du véhicule qui précède devient le point but pour le véhicule qui suit.

Un intérêt d'un tel principe de cantons mobiles déformables réside dans la possibilité de réduire l'intervalle entre véhicules.
- Retournement automatique des véhicules.
- Initialisation des véhicules à l'arrêt pour des fonctions du type retournement automatique ou garage/dégarage automatiques.

Conformément à l'invention, le dispositif permettant de s'affranchir des problèmes de diaphonie lors de la localisation d'un véhicule V se déplaçant le long de moyens de propagation P d'ondes électromagnétiques, comprend:
- des moyens d'émission E d'ondes électromagnétiques émises Σₑ,
- des moyens de réflexion R' desdites ondes électromagnétiques émises Σ_{e,}
- des moyens de réception R des ondes électromagnétiques réfléchies Σᵣ par lesdits moyens de réflexion R',
- des moyens de comparaison C desdites ondes électromagnétiques émises Σₑ et desdites ondes électromagnétiques réfléchies Σ_{r'}, et
- des moyens de traitement T du résultat obtenu par lesdits moyens de comparaison C permettant de déterminer la distance D entre ledit véhicule V et lesdits moyens de réflexion R',
lesdits moyens de propagation P desdites ondes électromagnétiques émises Σₑ et desdites ondes électromagnétiques réfléchies Σᵣ étant des moyens de propagation rayonnants, caractérisé en ce qu'il comporte, parallèlement au dispositif de localisation, des moyens séquenceurs S pour alterner les émissions et les réceptions desdites ondes électromagnétiques émises Σₑ ou réfléchies Σᵣ, lesquels moyens permettent la synchronisation de l'ensemble des dispositifs de localisation de véhicules se déplaçant le long des moyens de propagation d'ondes magnétiques en transmettant aux divers moyens de réflexion R', les instants où ils doivent être réfléchissant et en transmettant aux divers émetteurs E les moments où ils doivent émettre, de manière à n'autoriser qu'une émission Σₑ depuis un seul émetteur et qu'une réflexion Σᵣ depuis un seul réflecteur.

Un avantage du dispositif permettant de s'affranchir des problèmes de diaphonie lors de la localisation d'un véhicule se déplaçant le long de moyens de propagation d'ondes électromagnétiques de l'invention est de permettre de ne localiser, à un instant donné, qu'un mobile par rapport à un point de repère fixe donné, sans être perturbé, ni par les systèmes de localisation des autres véhicules, ni par les autres points de repères fixes.

Selon des modes particuliers de réalisation de l'invention, le dispositif permettant de s'affranchir des problèmes de diaphonie lors de la localisation d'un véhicule V se déplaçant le long de moyens de propagation P d'ondes électromagnétiques de l'invention satisfait à au moins l'une des caractéristiques suivantes:
- lesdits moyens séquenceurs S utilisent un réseau de transmission RT de données connecté aux différents dispositifs de localisation de véhicules,
- ledit réseau de transmission RT de données est supporté par lesdits moyens de propagation P,
- lesdits moyens séquenceurs S sont disposés au sol.

D'autres buts, caractéristiques et avantages de l'invention apparaîtront à la lecture de la description du dispositif permettant de s'affranchir des problèmes de diaphonie lors de la localisation d'un véhicule se déplaçant Le long de moyens de propagation d'ondes électromagnétiques, description faite en liaison avec les dessins dans lesquels:
- la figure 1 est une vue schématique d'ensemble du dispositif de localisation d'un véhicule se déplaçant le long de moyens de propagation, de la demanderesse,
- la figure 2 est une représentation synoptique du premier mode de réalisation préféré du dispositif de localisation d'un véhicule se déplaçant le long de moyens de propagation, de la demanderesse,
- la figure 3 est une représentation synoptique d'un autre mode de réalisation préféré du dispositif de localisation d'un véhicule se déplaçant le long de moyens de propagation, de la demanderesse,
- la figure 4 est une représentation synoptique du dispositif de localisation d'un véhicule se déplaçant le long de moyens de propagation d'ondes électromagnétiques de la demanderesse illustrant les problèmes de diaphonie entre plusieurs véhicules lors de la localisation de deux véhicules sur une même voie par rapport à un seul réflecteur,
- la figure 5 est une représentation synoptique du dispositif de localisation d'un véhicule se déplaçant le long de moyens de propagation d'ondes électromagnétiques de la demanderesse illustrant les problèmes de diaphonie entre plusieurs réflecteurs lors de la localisation d'un véhicule sur une voie par rapport à deux réflecteurs proches l'un de l'autre, et
- la figure 6 est une représentation synoptique d'un mode de réalisation préféré illustrant les moyens pour alterner les émissions et les réceptions des ondes électromagnétiques.

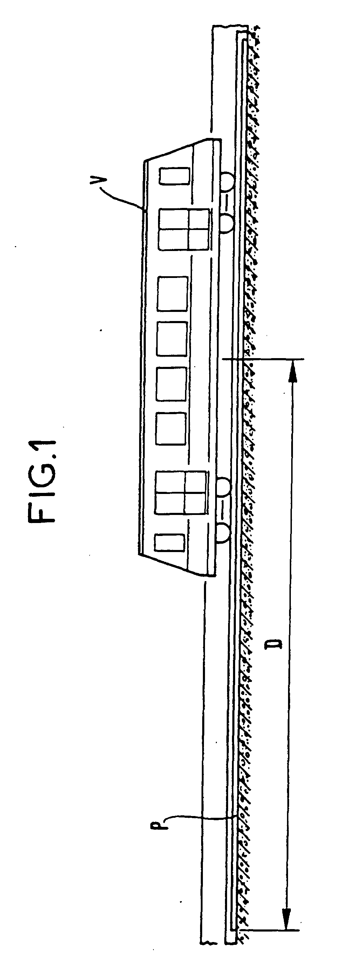

La figure 1 est une vue schématique d'ensemble du dispositif de localisation d'un véhicule V se déplaçant le long de moyens de propagation P, de la demanderesse.

Le dispositif de la demaderesse a pour but de déterminer la position du véhicule V c'est à dire de déterminer la distance D séparant le véhicule V d'un point donné des moyens de propagation P.

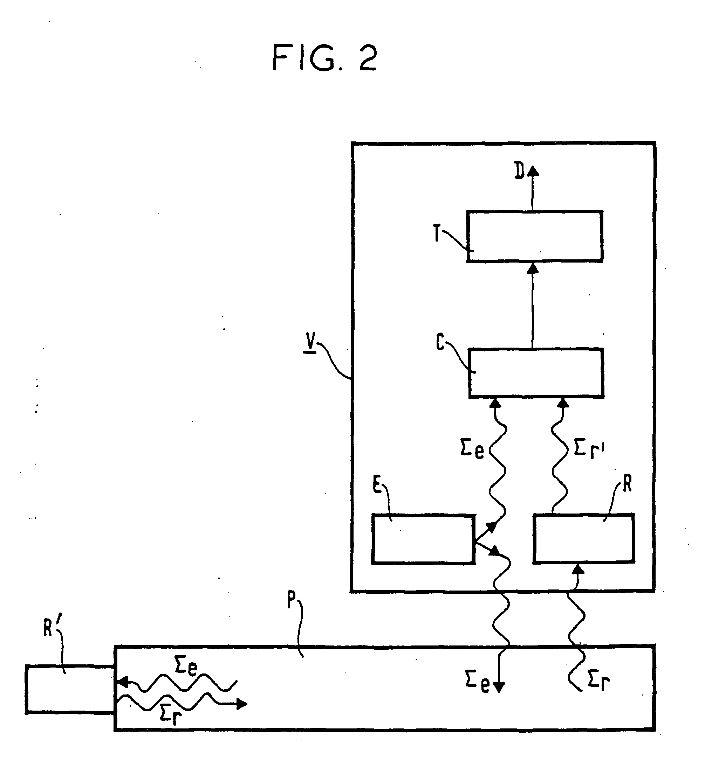

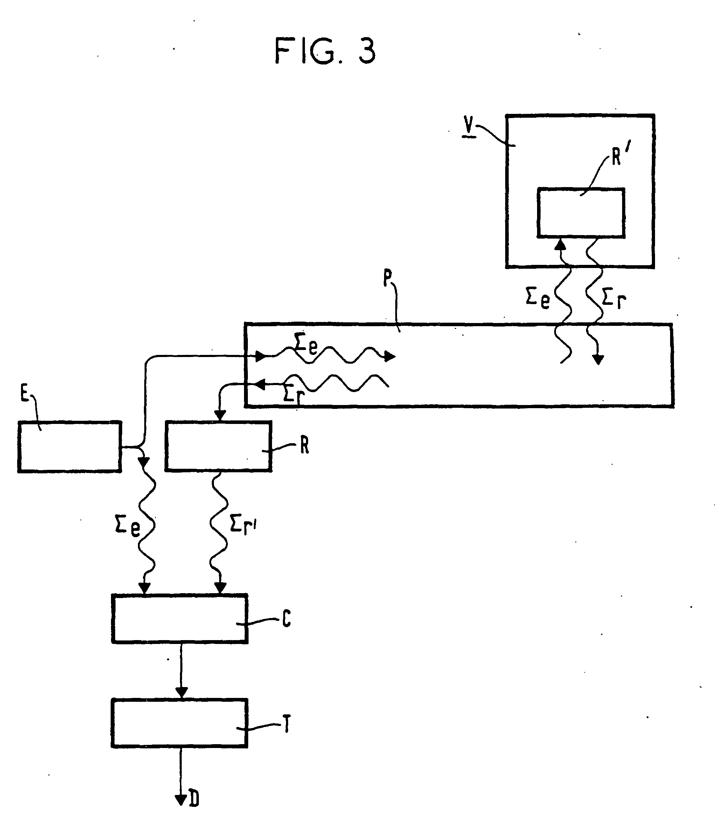

Conformément aux représentations synoptiques des figures 2 et 3, le dispositif de localisation d'un véhicule V se déplaçant le long de moyens de propagation P, comprend des moyens d'émission E d'ondes électromagnétiques Σₑ susceptibles de se propager dans les moyens de propagation P et des moyens de réception R.

Le dispositif de localisation comprend également des moyens de réflexion R' des ondes électromagnétiques Σₑ en direction des moyens de réception R,

Des moyens de comparaison C compare les ondes électromagnétiques émises Σₑ et les ondes électromagnétiques réfléchies Σᵣ par lesdits moyens de réflexion R'.

Le résultat obtenu par les moyens de comparaison C permet de calculer la distance D entre le véhicule V et les moyens de réflexion R', ceci par l'intermédiaire de moyens de traitement T.

Les moyens de propagation P des ondes électromagnétiques émises Σₑ et des ondes électromagnétiques réfléchies Σᵣ sont des moyens de propagation rayonnants quelle que soit la position spatiale des moyens d'émission E et des moyens de réception R le long des moyens de propagation P.

La figure 2 est une représentation synoptique du premier mode de réalisation préféré du dispositif de localisation d'un véhicule se déplaçant le long de moyens de propagation.

Le dispositif de localisation d'un véhicule V selon ce premier mode de réalisation comprend des moyens d'émission E d'ondes électromagnétiques Σₑ susceptibles de se propager dans les moyens de propagation P et des moyens de réception R.

Les moyens d'émission E des ondes électromagnétiques Σₑ et les moyens de réception R sont supportés par le véhicule V.

Les moyens de réflexion R' des ondes électromagnétiques Σₑ sont associés aux moyens de propagation P de manière à réfléchir les ondes électromagnétiques Σₑ en direction des moyens de réception. R.

Les moyens de réflexion R' et les moyens de réception R sont tous deux, de préférence, des moyens du type hétérodyne, c'est à dire que la réflexion des ondes émises Σₑ s'effectue avec un changement de fréquence pour donner des ondes réfléchies Σᵣ et que la réception de ces ondes réfléchies Σᵣ s'effectue avec le même changement de fréquence inverse pour donner des ondes reçues Σ_{r'}.

Ces différents changement de fréquence ont comme intérêt de permettre une réception sélective par les moyens de réception R. En particulier, les ondes issues des ondes émises Σₑ par les moyens d'émission E qui sont réfléchies sur les moyens de propagation P, au lieu d'être injectées dans ces moyens de propagation P, ne seront pas pris en compte par les moyens de réception R du fait qu'elles ne sont pas à la fréquence désirée.

Les moyens de réflexion R' sont disposés au sol.

Les moyens de comparaison C comparent les ondes électromagnétiques émises Σₑ et les ondes électromagnétiques reçues Σᵣ, par les moyens de réception R.

Le résultat obtenu par les moyens de comparaison C permet de calculer la distance D entre le véhicule V et les moyens de réflexion R' par l'intermédiaire de moyens de traitement T.

Ces moyens de comparaison C et ces moyens de traitement T sont supportés par le véhicule V.

La figure 3 est une représentation synoptique d'un autre mode de réalisation préféré du dispositif de localisation d'un véhicule se déplaçant le long de moyens de propagation.

Le dispositif de localisation selon cet autre mode de réalisation comprend des moyens d'émission E d'ondes électromagnétiques Σₑ susceptibles de se propager dans les moyens de propagation P et des moyens de réception R.

Les moyens d'émission E des ondes électromagnétiques Σₑ et les moyens de réception R sont disposés au sol et sont associés aux moyens de propagation P.

Des moyens de réflexion R' des ondes électromagnétiques Σₑ sont disposés dans le véhicule V de manière à réfléchir les ondes électromagnétiques Σₑ en direction des moyens de réception R.

Des moyens de comparaison C comparent les ondes électromagnétiques émises Σₑ et les ondes électromagnétiques reçues Σ_{r'} par les moyens de réception R.

Le résultat obtenu par les moyens de comparaison C permet de calculer la distance D entre le véhicule V et les moyens de récepion R par l'intermédiaire de moyens de traitement T.

D'une manière générale et quel que soit le mode de réalisation choisi, les moyens d'émission E et les moyens de récepion R sont avantageusement des moyens d'émission radar et des moyens de récepion radar, respectivement.

Il résulte de ce qui précède que les ondes électromagnétiques émises Σₑ sont des ondes radar.

La description qui suit porte sur un dispositif de localisation selon l'invention, conforme au premier mode de réalisation, composé de moyens d'émission radar et d'un guide d'onde rayonnant.

Cette description a pour but de mieux comprendre la mise en oeuvre du dispositif de localisation de l'invention.

Les moyens d'émission radar embarqués injectent dans le guide d'ondes une onde porteuse. L'onde porteuse se propage dans le guide jusqu'aux extrémités du guide.

Un transducteur, installé à l'une des extrémités du guide, capte l'onde porteuse émise. Le transducteur est un transducteur du type hétérodyne permettant de transposer en fréquence l'onde porteuse. Le transducteur réémet l'onde porteuse dans le guide.

L'onde porteuse transposée se propage dans le guide vers le véhicule et est reçue par les moyens de réception radar embarqués. Les moyens de réception radar embarqués sont des moyens de réception du type hétérodyne permettant de retransposer cette onde porteuse vers sa fréquence initiale. Des moyens de comparaison comparent l'onde porteuse émise avec l'onde porteuse réfléchie après que l'onde porteuse réfléchie soit remise à la fréquence de l'onde porteuse émise.

La mesure porte, par exemple, sur la différence de phase entre l'onde porteuse émise avec l'onde porteuse réfléchie. La différence de phase est liée à la distance D parcourue par les ondes.

Cette opération est de préférence faite pour un grand nombre de fréquences. Ces mesures permettent d'obtenir un tableau de nombres complexes (amplitude et phase).

Par transformée de Fourier, appliquée au tableau de nombres complexes, on passe du domaine fréquentiel au domaine temporel.

Sur le tableau transposé du domaine fréquentiel au domaine temporel on lit la réponse impulsionnelle du système. On détermine le temps de propagation des ondes en observant la position du pic de la réponse impulsionnelle.

Connaissant la vitesse de propagation des ondes dans le guide d'ondes, on calcule la position du véhicule.

Une autre solution consiste à travailler dans le domaine temporel et non plus dans le domaine fréquentiel.

Il est évident que le dispositif de la présente invention est susceptible d'être utilisé en propagation aérienne avec des transpondeurs placés le long de la voie. Toutefois des phénomènes liés à la présence de chemins multiples diminueront la précision.

Les moyens de propagation peuvent être, par exemple, un guide rayonnant ou encore un câble rayonnant sous réserve de disposer de bandes de fréquences suffisantes.

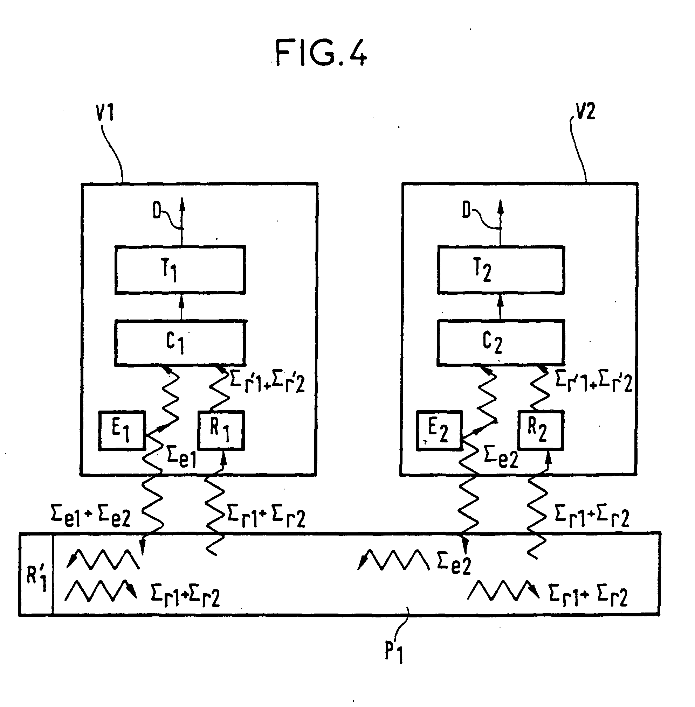

La figure 4 est une représentation synoptique du dispositif de localisation d'un véhicule se déplaçant le long de moyens de propagation d'ondes électromagnétiques de la demanderesse illustrant les problèmes de diaphonie entre plusieurs véhicules lors de la localisation de deux véhicules sur une même voie par rapport à un seul réflecteur.

Comme représenté sur cette figure 4, l'émetteur E₁ du premier véhicule V₁ émet des ondes électromagnétiques Σₑ₁ dans les moyens de propagation d'ondes électromagnétiques P₁.

L'émetteur E₂ du second véhicule V₂ émet des ondes électromagnétiques Σₑ₂ dans les moyens de propagation d'ondes électromagnétiques P₁.

Les moyens de réflexion R'₁ disposés à l'extrémité des moyens de propagation d'ondes électromagnétiques P₁ réfléchissent les ondes électromagnétiques émises Σₑ₁ et Σₑ₂ d'où les ondes électromagnétiques réfléchies Σᵣ₁ et Σᵣ₂.

Les moyens de réception R₁ et R₂ disposés sur les véhicules effectuent un changement de fréquence pour donner les ondes reçues Σ_{r'1} et Σ_{r'2} sur le premier véhicule V₁ et les ondes reçues Σ_{r"1} et Σ_{r"2} sur le second véhicule V₂.

Dans les zones où l'on doit localiser un premier V₁ et un second V₂ véhicules par rapport à un même réfecteur R'₁, le comparateur C₁ du premier véhicule V₁ ne compare pas Σₑ₁ à Σ_{r'1} mais à Σ_{r'1}+Σ_{r'2} et le comparateur C₂ du second véhicule V₂ ne compare pas Σₑ₂ à Σ_{r"2} mais à Σ_{r"1}+Σ_{r"2}.

Il résulte de ce qui précède que la diaphonie perturbe la localisation de deux véhicules sur une même voie par rapport à un seul réflecteur.

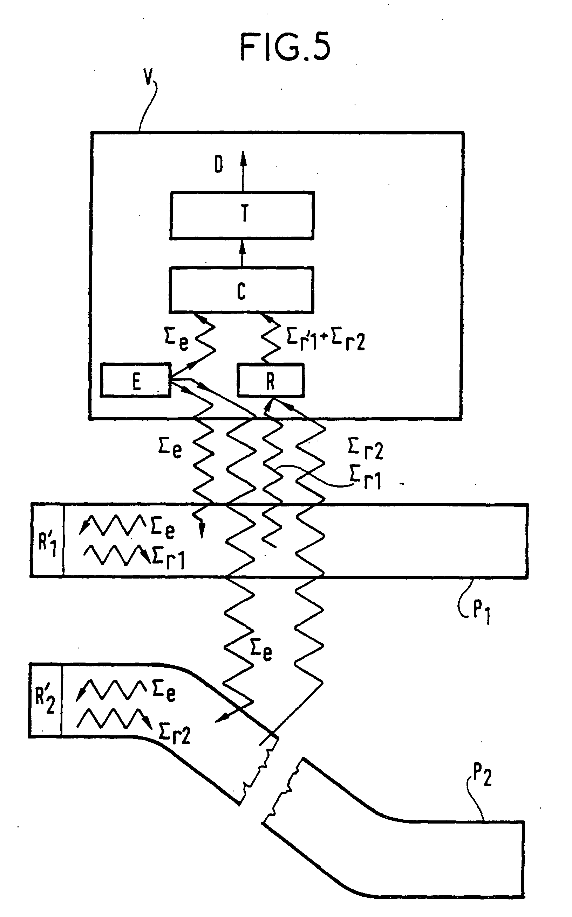

La figure 5 est une représentation synoptique du dispositif de localisation d'un véhicule se déplaçant le long de moyens de propagation d'ondes électromagnétiques de la demanderesse illustrant les problèmes de diaphonie entre plusieurs réflecteurs lors de la localisation d'un véhicule sur une voie par rapport à deux réflecteurs proches l'un de l'autre.

Comme représenté sur cette figure 5, l'émetteur E du véhicule V émet des ondes électromagnétiques Σₑ dans les premier moyens de propagation P₁ d'ondes électromagnétiques.

Les premiers moyens de réflexion R'₁ disposés à l'extrémité des premiers moyens de propagation P₁ d'ondes électromagnétiques réfléchissent les ondes électromagnétiques émises Σₑ d'où les ondes électromagnétiques réfléchies Σᵣ₁.

Du fait des problèmes de diaphonie, les ondes électromagnétiques émises Σₑ sont couplées dans les seconds moyens de propagation P₂ d'ondes électromagnétiques.

Les seconds moyens de réflexion R'₂ disposés à l'extrémité des seconds moyens de propagation P₂ d'ondes électromagnétiques réfléchissent les ondes électromagnétiques émises Σₑ d'où les ondes électromagnétiques réfléchies Σᵣ₂.

Les moyens de réception R disposés sur le véhicule V effectuent un changement de fréquence d'où les ondes reçues Σ_{r'1} par les moyens de réception R du véhicule V.

Du fait des problèmes de diaphonie, les ondes électromagnétiques réfléchies Σᵣ₂ sont également reçues par les moyens de réception R du véhicule V.

Les moyens de réception R disposés sur le véhicule V effectuent un changement de fréquence pour donner les ondes reçues Σ_{r'1} et Σ_{r'2} par les moyens de comparaison C du véhicule V.

Dans les zones où l'on doit localiser un véhicule V par rapport à deux réfecteurs R'₁ et R'₂, le véhicule V ne compare pas Σₑ à Σ_{r'1} mais à Σ_{r'1}+Σ_{r'2}.

Il résulte de ce qui précède que la diaphonie perturbe la localisation d'un véhicule sur une voie par rapport à deux réflecteurs proches l'un de l'autre.

Dans les zones où il peut y avoir de la diaphonie soit entre plusieurs véhicules, soit entre plusieurs réflecteurs, un dispositif parallèle au dispositif de localisation d'un véhicule se déplaçant le long de moyens de propagation d'ondes électromagnétiques permet de s'affranchir de ces problèmes de diaphonie.

Le dispositif permettant de s'affranchir des problèmes de diaphonie lors de la localisation d'un véhicule se déplaçant le long de moyens de propagation d'ondes électromagnétiques comporte des moyens pour alterner les émissions et les réceptions des ondes électromagnétiques.

En conséquence, dans une zone où il y a possibilité de diaphonie, soit entre plusieurs véhicules, soit entre plusieurs réflecteurs, le dispositif permettant de s'affranchir des problèmes de diaphonie de l'invention n'autorise au maximum qu'une émission depuis un seul véhicule et qu'une réflexion depuis un seul réflecteur.

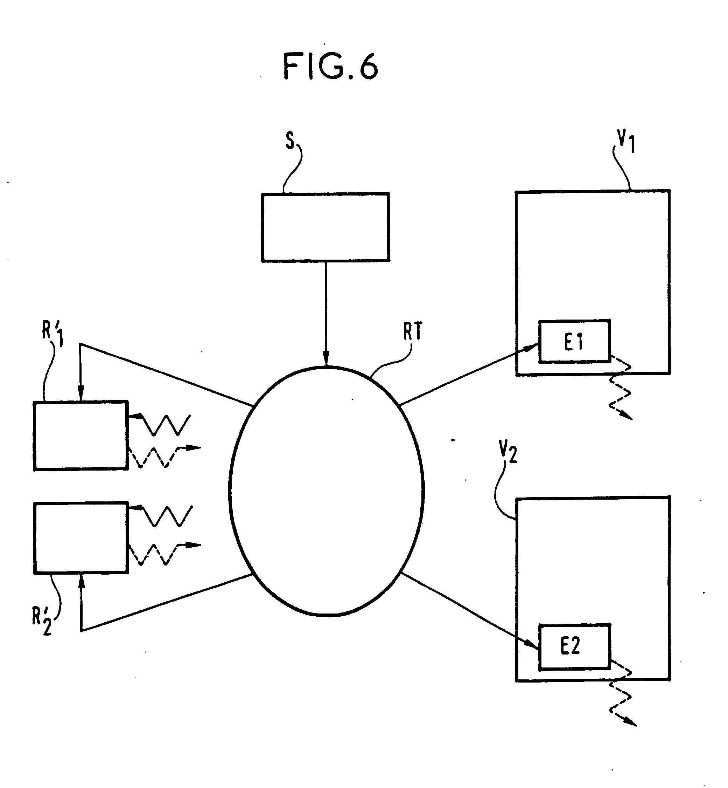

La figure 6 décrit un mode de réalisation préféré des moyens pour alterner les émissions et les réceptions des ondes électromagnétiques.

Sont de nouveau représentés sur cette figure 6 l'émetteur E₁ du premier véhicule V₁, l'émetteur E₂ du second véhicule V2 et les moyens de réflexion R'₁, R'₂ disposés à l'extrémité de leurs moyens de propagation respectifs.

L'alternance des émissions et des réceptions des ondes électromagnétiques du dispositif selon l'invention, est obtenue au moyen de moyens séquenceurs S dont la fonction est la synchronisation de l'ensemble des dispositifs de localisation de véhicules se déplaçant le long de moyens de propagation d'ondes électromagnétiques.

Ces moyens séquenceurs sont par exemple disposés au sol.

Ces moyens séquenceurs utilisent un réseau de transmission RT de données connecté aux différents dispositifs de localisation de véhicules.

Ce réseau de transmission de données est, de préférence, supporté par le médium de transmission, à savoir: le guide d'ondes rayonnant.

Les moyens séquenceurs transmettent, aux divers moyens de réflexion R', les instants où ils doivent être réfléchissant par un "ordre de mise en réflexion".

Les moyens séquenceurs transmettent, aux divers émetteurs E, les instants où ils doivent émettre par un "ordre de mise en émission".

## Revendications

1. Dispositif permettant de s'affranchir des problèmes de diaphonie lors de la localisation d'un véhicule V se déplaçant le long de moyens de propagation P d'ondes électromagnétiques, comprenant un dispositif de localisation comportant:
- des moyens d'émissions E d'ondes électromagnétiques émises Σₑ constitués par un ou plusieurs émetteurs,
- des moyens de réflexion R' desdites ondes électromagnétiques émises Σₑ constitués par un ou plusieurs réflecteurs,
- des moyens de réception R des ondes électromagnétiques réfléchies Σᵣ par lesdits moyens de réflexion R',
- des moyens de comparaison C desdites ondes électromagnétiques émises Σₑ et desdites ondes électromagnétiques réfléchies Σᵣ, et
- des moyens de traitement T du résultat obtenu par lesdits moyens de comparaison C permettant de déterminer la distance D entre ledit véhicule V et lesdits moyens de réflexion R',
lesdits moyens de propagation P desdites ondes électromagnétiques émises Σₑ et desdites ondes électromagnétiques réfléchies Σᵣ étant des moyens de propagation rayonnants,
**caractérisé en ce qu'**il comporte, parallèlement au dispositif de localisation, des moyens séquenceurs S pour alterner les émissions et les réceptions desdites ondes électromagnétiques émises Σₑ ou réfléchies Σ_{r,} lesquels moyens permettent la synchronisation de l'ensemble des dispositifs de localisation de véhicules se déplaçant le long de moyens de propagation d'ondes magnétiques en transmettant aux divers moyens de réflexion R', les instants où ils doivent être réfléchissant et en transmettant aux divers émetteurs E les moments où ils doivent émettre, de manière à n'autoriser qu'une émission Σₑ depuis un seul émetteur et qu'une réflexion Σᵣ depuis un seul réflecteur.

2. Dispositif selon la revendication 1, dans lequel lesdits moyens séquenceurs S utilisent un réseau de transmission RT de données connecté aux différents dispositifs de localisation de véhicules.

3. Dispositif selon la revendication 2, dans lequel ledit réseau de transmission RT de données est supporté par lesdits moyens de propagation P.

4. Dispositif selon l'une quelconque des revendications 1 et 2, dans lequel lesdits moyens séquenceurs sont disposés au sol.

## Patentansprüche

1. Vorrichtung zur Behebung von Übersprechproblemen beim Orten eines Fahrzeugs V, das sich entlang von Ausbreitungsmitteln P für elektromagnetische Wellen bewegt, mit einer Ortungsvorrichtung, welche umfasst:
- Sendemittel E für gesendete elektromagnetische Wellen Σe, gebildet durch einen oder mehrere Sender,
- Reflexionsmittel R' für die gesendeten elektromagnetischen Wellen Σe, gebildet durch einen oder mehrere Reflektoren,
- Empfangsmittel R für von den Reflexionsmitteln R' reflektierte elektromagnetische Wellen Σ_{R},
- Vergleichsmittel C zum Vergleichen der gesendeten elektromagnetischen Wellen Σe und der reflektierten elektromagnetischen Wellen Σ_{R}, und
- Verarbeitungsmitteln T zum Verarbeiten des von den Vergleichsmitteln C erhaltenen Ergebnisses, die es erlauben, den Abstand D zwischen dem Fahrzeug V und den Reflexionsmitteln R' zu bestimmen,
wobei die Ausbreitungsmittel P für die gesendeten elektromagnetischen Wellen Σe und die reflektierten elektromagnetischen Wellen Σ_{R} strahlende Ausbreitungsmittel sind,
**dadurch gekennzeichnet, dass** sie parallel zur Ortungsvorrichtung Sequenziermittel S zum Abwechseln des Sendens und des Empfangs der gesendeten oder reflektierten elektromagnetischen Wellen Σe bzw. Σ_{R} aufweist, die die Synchronisation der Gesamtheit der Ortungsvorrichtungen von Fahrzeugen, die sich entlang der Ausbreitungsmittel für elektromagnetische Wellen bewegen, ermöglichen, indem sie an die diversen Reflexionsmittel R' die Zeitpunkte, zu denen sie reflektierend sein sollen, und an die diversen Sender E die Zeitpunkte, wo sie senden sollen, übertragen, um nur eine Sendung Σe eines einzigen Senders und nur eine Reflexion Σ_{R} an einem einzigen Reflektor zuzulassen.

2. Vorrichtung nach Anspruch 1, bei der die Sequenziermittel S ein Datenübertragungsnetz RT nutzen, das an die verschiedenen Fahrzeugortungsvorrichtungen angeschlossen ist.

3. Vorrichtung nach Anspruch 2, bei der das Datenübertragungsnetz RT von den Ausbreitungsmitteln P unterstützt ist.

4. Vorrichtung nach einem beliebigen der Ansprüche 1 und 2, bei der die Sequenziermittel am Boden angeordnet sind.

## Claims

1. Apparatus for avoiding crosstalk problems when locating a vehicle V travelling along propagation means P for propagating electromagnetic waves, said apparatus including locating apparatus comprising:
transmit means E constituted by one or more transmitters for transmitting transmitted electromagnetic waves Σₑ;
reflection means R' constituted by one or more reflectors for reflecting said transmitted electromagnetic waves Σₑ;
receive means R for receiving the reflected electromagnetic waves Σᵣ reflected by said reflection means R';
comparator means C for comparing said transmitted electromagnetic waves Σₑ with said reflected electromagnetic waves Σᵣ; and
processing means T for processing the result obtained by said comparator means C, so as to make it possible to determine the distance D between said vehicle V and said reflection means R';
said propagation means P for propagating said transmitted electromagnetic waves Σₑ and said reflected electromagnetic waves Σᵣ being radiating propagation means,
the apparatus being **characterized in that** it includes, parallel to the location apparatus, sequencer means S for alternating transmission and reception of said transmitted electromagnetic waves Σₑ and of said reflected electromagnetic waves Σᵣ, which means make it possible to synchronize all of the location apparatuses for locating vehicles travelling along means for propagating magnetic waves by conveying to the various reflection means R' the instants at which they must be reflective, and by conveying to the various transmitters E, the instants at which they must transmit, so as to authorize only one transmission Σₑ from a single transmitter and only one reflection Σᵣ from a single reflector.

2. Apparatus according to claim 1, in which said sequencer means S use a data transmission network RT connected to the various vehicle location apparatuses.

3. Apparatus according to claim 2, in which said data transmission network RT is supported by said propagation means P.

4. Apparatus according to claim 1 or 2, in which said sequencer means S are disposed on the ground.
